# EUROPEAN PATENT SPECIFICATION

(11) **EP 1 138 969 B1**
(45) Date of publication and mention of the grant of the patent: **23.06.2004**
(21) Application number: 01302845.1
(22) Date of filing: 27.03.2001
(51) Int. Cl.: F16D 41/06

(54) **Rotation transmitting device incorporating one-way clutch therein**
Einrichtung zur übertragung einer Drehbewegung mit einer Einweckupplung
Dispositif de transmission de rotation avec embrayage unidirectionnel

(30) Priority: 28.03.2000 JP 2000089048
(43) Date of publication of application: 04.10.2001
(73) Proprietor: NSK LTD, Shinagawa-ku, Tokyo (JP); MITSUBISHI DENKI KABUSHIKI KAISHA, Tokyo 100-8310 (JP)
(72) Inventor: Aida, Hiroshi&c/o NSK Ltd, Kanagawa-ken (JP); Kitamura, Yutaka Mitsubishi Denki KK, Tokyo 100-8310 (JP); Kinoshita, Takashi Mitsubishi Engineering Co. Ltd, Tokyo 100-0004 (JP)
(74) Representative: Abbie, Andrew Kenneth

(56) References cited:
- EP-A- 0 947 722
- DE-A- 19 531 745
- DE-A- 19 626 959
- US-A- 3 017 002
- PATENT ABSTRACTS OF JAPAN vol. 1996, no. 10, 31 October 1996 (1996-10-31) & JP 08 166027 A (NTN CORP), 25 June 1996 (1996-06-25)

## Description

The present invention relates to an improvement in a rotation transmitting device incorporating a one-way clutch therein which it is possible to use as a driven pulley fixed to an end of a rotary shaft of an alternator which serves as a power generator in a car, or a pinion fixed to an end of a rotary shaft for constituting a starter motor of a starting system of a car.

A prior art rotation transmitting device according to the preamble of claim 1 is known from EP-A-0 947 722.

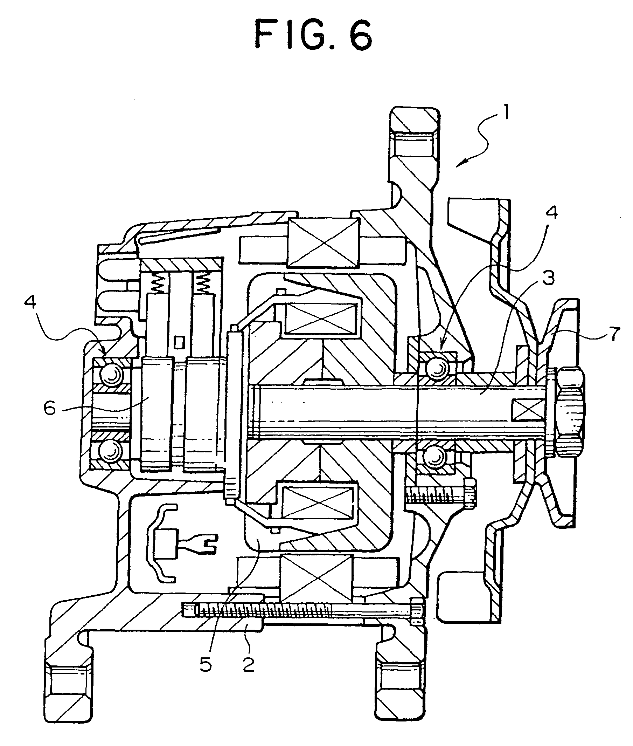

The structure of an alternator which generates electric power necessary for a car by using an engine of the car as its driving source is disclosed, for instance, in Japanese Patent Application Laid-Open No. 7-139550. Fig. 6 illustrates an alternator 1 which is described in the above application. Referring to Fig. 6, a rotary shaft 3 is rotatably supported by a pair of rolling bearings 4 and 4 inside a housing 2. A rotor 5 and a rectifier 6 are provided in a middle part of this rotary shaft 3. In addition, a driven pulley 7 is fixed to an end portion (the right end portion in Fig. 6) of this rotary shaft 3 which is protruded outward from the housing 2. In a state in which the alternator is assembled in the engine, an endless belt is wound around this driven pulley 7 so that the rotary shaft 3 is driven to rotate freely by means of a crank shaft of the engine.

As the driven pulley 7 described above, a pulley which is simply fixed to the rotary shaft 3 has been conventionally employed. However, various types of a pulley device incorporating a one-way clutch therein have been recently proposed as rotation transmitting devices incorporating a one-way clutch therein which are arranged to transmit the driving power from the endless belt to the rotary shaft when the running speed of the endless belt is fixed or on the increase, while allowing relative rotation between the driven pulley and the rotary shaft when the running speed of the endless belt is on the decrease. Some of such pulley devices have been put into practice use. For instance, pulley devices incorporating a one-way clutch therein and having a function as described above are disclosed in Japanese Patent Application Laid-Open Nos. 56-101353, 7-317807, 8-61443, 8-226462 and 7-72585, French Patent Publication FR2726059A1, and the like.

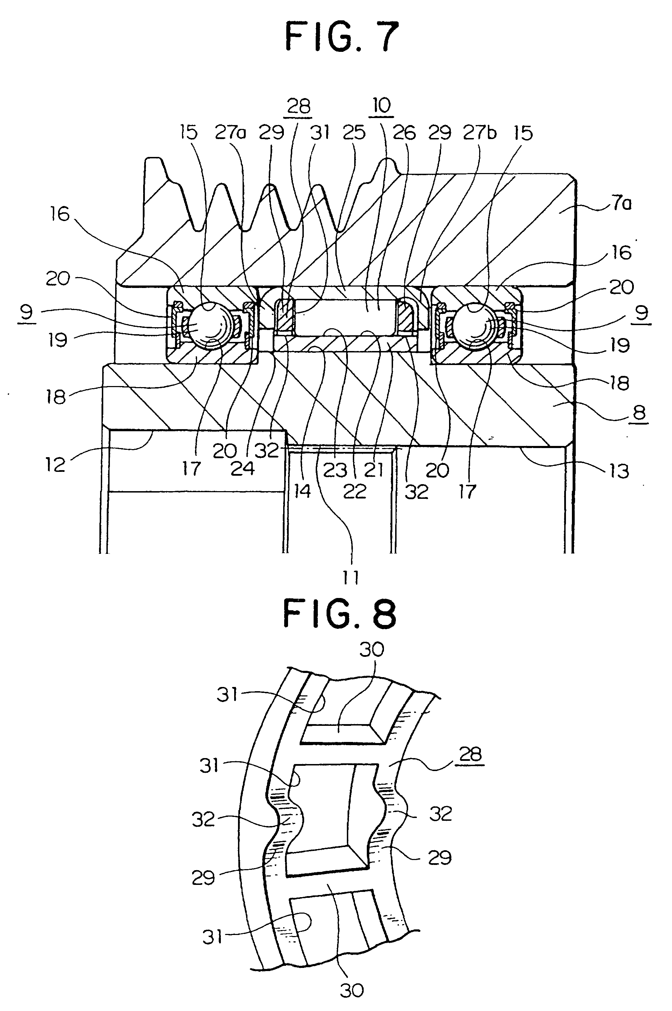

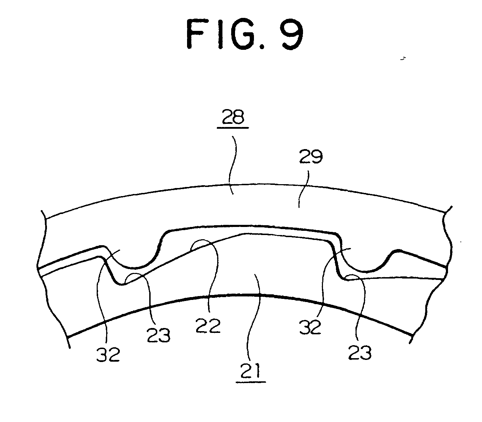

Figs. 7 to 9 illustrate a pulley device incorporating a one-way clutch conventionally known by being described in either of the above publications. This pulley device incorporating a one-way clutch therein comprises a sleeve 8 which serves as a radially inner member, or an inner diameter side member, and can be fitted and fixed onto the rotary shaft 3 of the alternator 1 (see Fig. 6). Around this sleeve 8, there is provided a driven pulley 7a which serves as a radially outer member, or an outer diameter side member, in a cylindrical form to be concentric with this sleeve 8. Then, a pair of support bearings 9, 9 and a roller clutch 10 serving as the one-way clutch are provided between the outer peripheral surface of the sleeve 8 and the inner peripheral surface of the driven pulley 7a.

The sleeve 8 is formed to be cylindrical as a whole, and is fitted and fixed onto an end portion of the rotary shaft 3 of the alternator 1 to be rotatable with this rotary shaft 3. To this end, in the illustrated example, a threaded hole portion 11 is formed in a middle part on the inner peripheral surface of the sleeve 8, and this threaded hole portion and a male screw portion which is formed on the outer peripheral surface at the tip end portion of the rotary shaft 3 are arranged to be thread-engaged with each other. A latch hole portion 12 having a hexagonal cross section is also formed at the tip end portion on the inner peripheral surface of the sleeve 8 (the left end portion in Fig. 7). The tip end portion of a tool such as a hexagonal wrench can be latched by this latch hole portion 12. Furthermore, the base portion (the right end portion in Fig. 7) of the inner peripheral surface of the sleeve 8 serves as a circular hole portion 13 which can be fitted on a portion near the middle part of the tip end portion of the rotary shaft 3 with no play. Note that a spline engagement, non-circular fitting, key engagement, or another arrangement may be employed as the arrangement for combining the sleeve 8 with the rotary shaft 3 in such a manner that they are not relatively rotated with each other. In addition, the central portion of the outer peripheral surface of the sleeve 8 serves as a large diameter portion 14 which has a larger diameter size than that of another portion.

On the other hand, a tip half portion of the outer peripheral surface of the driven pulley 7a has a cross section in a waveform along the widthwise direction, around which a part of the endless belt called a poly-V belt can be wound. Then, the above-mentioned roller clutch 10 is disposed in a middle part in the axial direction of a space existing between the outer peripheral surface of the sleeve 8 and the inner peripheral surface of the driven pulley 7a, while the support bearings 9, 9 are respectively disposed at positions to sandwich this roller clutch 10 from the both sides in the axial direction near the both ends of this space in the axial direction.

Out of these members, the support bearings 9, 9 allow, while supporting a radial load applied on the driven pulley 7a, a relative rotation between this driven pulley 7a and the sleeve 8. In the illustrated example, ball bearings of a deep groove type are used as the support bearings 9, 9. More specifically, these support bearings 9, 9 comprise outer races 16, 16 respectively having outer raceways 15, 15 of the deep groove type on the respective inner peripheral surfaces thereof, inner races 18, 18 respectively having inner raceways 17, 17 of the deep groove type on the respective outer peripheral surfaces thereof, and balls 19, 19 provided in plural sets as capable of rolling between the outer raceways 15, 15 and the inner raceways 17, 17. Then, the outer races 16, 16 are fitted and fixed onto the inner peripheral surface near the both ends of the driven pulley 7a, while the inner races 18, 18 are onto the outer peripheral surfaces near the both ends of the sleeve 8, respectively. In this state, the inner races 18, 18 in the axial direction are brought into contact with the respective end surfaces (step surfaces) in the axial direction of the large diameter portion 14. Also, in the illustrated example, seal rings 20, 20 are provided between the inner peripheral surfaces of the both end portions of the outer races 16, 16 and the outer peripheral surfaces of the both end portions of the inner races 18, 18, respectively, thereby sealing openings at the both ends of the space provided with the balls 19, 19 described above.

It is preferable that a communication hole is formed in a part of each of the seal rings 20, 20 on the side facing a space which is formed by and between the support bearings 9 , 9 , out of the above-described seal rings 20, 20, so that this space and the space receiving therein the balls 19, 19 of the support bearings 9, 9 are communicated to each other, in order to prevent excessive rise of the pressure inside the space formed by and between the support bearings 9, 9 when the support bearings 9, 9 are inserted with pressure between the inner peripheral surface of the driven pulley 7a and the outer peripheral surface of sleeve 8. When the outer races 16, 16 are interference-fitted and fixed into the inner peripheral surface of the driven pulley 7a, it is preferable that, out of the inner peripheral surface of this driven pulley 7a, a part in which the outer races 16, 16 are fitted is made a large diameter portion, while a part in which a clutch outer race 25, which is described later, is fitted is made a small diameter portion, so that the large diameter portion and the small diameter portion are in a stepped form continued by the paired step surfaces, since a flaw in a groove shape is easily created along the axial direction on the inner peripheral surface of the driven pulley 7a when the clutch outer race 25 is thrust into the inner peripheral surface of this driven pulley 7a in case that the inner peripheral surface of the driven pulley 7a is a single cylindrical surface. Then, when such a groove is created, there is a possibility that the grease enclosed in the gap between the both support bearings 9, 9 is leaked out through the gap between the groove and the outer peripheral surfaces of the outer races 16, 16. On the contrary, if the size of a part. in which the clutch outer race 25 is fitted is set to be smaller than that of a part in which the outer races 16, 16 are fitted, such a flaw as described above can be prevented.

The roller clutch 10 is arranged to allow transmission of the force of rotation between the driven pulley 7a and the sleeve 8 only when the driven pulley 7a has a tendency to rotate in a predetermined direction relatively to the sleeve 8. In order to arrange the roller clutch 10 as described above, the clutch inner race 21 is interference-fitted and fixed onto the large diameter portion 14 of the sleeve 8. This clutch inner race 21 is formed to be cylindrical as a whole by press working, or other plastic working, of a steel plate of, for instance, cemented steel, and on the outer surface of which, a cam surface 22 is formed. More specifically, a plurality of concave portions 23, 23 each called a ramp portion are formed on the outer peripheral surface of the clutch inner race 21 at regular intervals in the circumferential direction, whereby the outer peripheral surface serves as the cam surface 22 mentioned above. Note that, in the illustrated example, a concave chamfered portion 24 is formed on one end portion (the left end portion in Fig. 7) on the inner peripheral surface of the clutch inner race 21, and this chamfered portion 24 serves as a guide surface when the clutch inner race 21 is to be thrust with pressure into the outer peripheral surface of the large diameter portion 14.

On the contrary, out of the inner peripheral surface of the clutch outer race 25 which is interference-fitted and fixed in the middle part on the inner peripheral surface of the driven pulley 7a, at least a middle part in the axial direction in contact with rollers 26, which is described later, is simply formed as a cylindrical surface. Such clutch outer race 25 is formed to be cylindrical as a whole also by press working or other plastic working of a steel plate of, for instance, cemented steel, and inward flange portions 27a and 27b are formed at the both ends of the clutch outer race 25 in the axial direction. Note that one flange portion 27a (the left one in Fig. 7) out of the two flange portions 27a and 27b is formed prior to the manufacturing of the clutch outer race 25, so that this flange portion 27a has the thickness equal to that of the cylindrical portion of the clutch outer race 25. On the other hand, the other flange portion 27b (the right one in Fig. 7) is formed after a roller 26 which is described later and the clutch retainer 28 are assembled in the clutch outer race 25 inward in the radial direction. Consequently, the flange portion 27b is formed thin.

A plurality of rollers 26 for constituting the roller clutch 10 together with the clutch inner race 21 and the clutch outer race 25 are supported to allow a slight displacement in the rolling and circumferential directions by a clutch retainer 28 which is fitted on the clutch inner race 21 to allow no rotation with respect to the clutch inner race 21. This clutch retainer 28 is formed in a cylindrical form of a cage type as a whole of synthetic resin (for instance, synthetic resin of polyamide 66, polyamide 46, polyphenylene sulfide, or the like, mixed with 20% of glass fiber). This clutch retainer 28 is provided with a pair of rim portions 29, 29 each formed in an annular shape, and a plurality of column portions 30, 30 for connecting the both rim portions 29, 29 to each other.

Portions surrounded on the four sides by the inner side surfaces of the rim portions 29, 29 and the side surfaces of the column portions 30, 30 in the circumferential direction are called the pockets 31, 31 for holding the rollers 26 to allow a slight displacement in the rolling and circumferential directions. Then, arcuate convex portions 32, 32 which are formed at a plurality of positions on the inner peripheral surfaces of the rim portions 29, 29 are engaged with the concave portions 23, 23 formed on the outer peripheral surface of the clutch inner race 21, whereby the clutch retainer 28 is attached to the clutch inner race 21 in such a manner that a relative rotation with this clutch inner race 21 is not allowed.

Between the column portions 30, 30 for constituting this clutch retainer 28 and the rollers 26, there are provided, respectively, leaf springs or springs each typically made of a synthetic resin and integrally formed with this clutch retainer 28. These springs elastically press the respective rollers 26 in the same direction with respect to the circumferential direction of the clutch retainer 28 toward a portion, out of a cylindrical gap formed between the outer peripheral surface of the cam surface 22 and the inner peripheral surface (cylindrical surface) of a middle part of the clutch outer race 25, which is narrower in the radial direction. The both end surfaces in the axial direction of the clutch retainer 28 as described above are approximated to face the inner side surfaces of the two flange portions 27a, 27b for constituting the clutch outer race 25, thereby preventing a displacement of this clutch retainer 28 in the axial direction.

By the use of the pulley device incorporating a one-way clutch arranged as described above, when the driven pulley 7a and the sleeve 8 have a tendency to rotate relatively to each other in a predetermined direction, each roller 29 enters into the narrower portion in the radial direction of the cylindrical gap, whereby the relative rotation between the driven pulley 7a and the sleeve 8 becomes impossible (in a locked state). On the other hand, when the driven pulley 7a and the sleeve 8 are rotated relatively to each other in a direction opposite to the predetermined direction, each of the rollers 26 is retracted to a portion having the greater width in the radial direction of the cylindrical gap, thereby allowing the relative rotation between the driven pulley 7a and the sleeve 8 (in an over-run state).

There are two reasons for employing the pulley device incorporating a one-way clutch for an alternator having a structure as described above, as described below. The first reason is to prolong the life of the endless belt. For instance, by the use of a diesel engine as the driving engine, a fluctuation in angular speed of rotation of the crank shaft becomes great at the time of low rotation such as an idling time. As a result, the running speed of the endless belt which is wound around the driving pulley fluctuates finely. On the other hand, the rotary shaft 3 of the alternator which is driven to rotate through the driven pulley by the use of this endless belt does not fluctuate so rapidly owing to the inertia masses of the rotary shaft 3 and a rotor, or the like, fixed to this rotary shaft 3. Thus, when the driven pulley is merely fixed to the rotary shaft, the endless belt and the driven pulley are inclined to rub each other in the both directions upon a fluctuation in the angular speed of rotation of the crank shaft. As a result, the stress works on the endless belt which rubs this driven pulley repeatedly in different directions, to easily cause a slip between this endless belt and the driven pulley, or to reduce the life of this endless belt.

Accordingly, by employing the pulley device incorporating a one-way clutch for an alternator having a structure as described above as the driven pulley described above, it is arranged such that the force of rotation can be transmitted from the driven pulley to the rotary shaft 3 when the running speed of the endless belt is fixed or on the increase, while the relative rotation is allowed between the driven pulley and the rotary shaft 3 when the running speed of the endless belt is on the decrease. More specifically, when the running speed of the endless belt is on the decrease, the angular speed of rotation of the driven pulley is set to be slower than the angular speed of rotation of the rotary shaft so as to prevent strong friction between the endless belt and the driven pulley in a contact portion therebetween. Thus, the direction of the stress acting on the frictional portion between the driven pulley and the endless belt is fixed so as to prevent a slip between this endless belt and the driven pulley or reduction of the life of this endless belt.

The second reason is to enhance the efficiency in power generation by the alternator. The rotary shaft 3 to which the rotor of the alternator is fixed is driven to rotate by the driving engine of the car through the endless belt and the driven pulley. When a driven pulley of a fixed type is used, if the speed of rotation of the driving engine is rapidly decreased, the speed of rotation of the rotor is also rapidly decreased, whereupon an amount of power generation by the alternator also rapidly decreases. On the contrary, when the pulley device incorporating a one-way clutch for an alternator described above is used as a driven pulley to be attached to the alternator, even if the speed of rotation of the driving engine is rapidly decreased, the speed of rotation of the rotor is gradually decreased due to the force of inertia, and the alternator continues to generate power all the time. As a result, compared with a case in which the driven pulley of a fixed type is used, the kinetic energies of the rotary shaft and the rotor can be effectively utilized, so as to increase an amount of power generation by the alternator.

With the conventional structure described above, the displacement of the clutch retainer 28 in the axial direction is prevented by the paired flange portions 27a, 27b which are provided at the both ends of the clutch outer race 25. More specifically, when the clutch retainer 28 is to be displaced in the axial direction at the time of over-run at which the driven pulley 7a and the sleeve 8 are rotated relatively to each other, an end surface in the axial direction of this clutch retainer 28 and the inner side surface of one 27a (or 27b) of the paired flange portions are brought into contact (sliding contact) to prevent the displacement in the axial direction of the clutch retainer 28. However, in case of the pulley device incorporating a one-way clutch for an alternator as described above, a relative speed of rotation between the pulley 7a and the sleeve 8 may reach several hundred min⁻¹ (r. p. m. ) to several thousand min⁻¹ (r. p. m. ) in an extreme case. For this reason, if the both end surfaces in the axial direction of the clutch retainer 28 and the inner side surfaces of the flange portions 27a, 27b are brought into sliding contact as described above, the both end surfaces in the axial direction of the clutch retainer 28 may be easily worn away, or a frictional heat which is generated in the sliding contact portions between the both end surfaces in the axial direction of this clutch retainer 28 and the inner side surfaces of the flange portions 27a, 27b may be excessively high.

Then, when abraded powder which is generated due to the abrasion of the both end surfaces in the axial direction of the clutch retainer 28 is mixed into the grease for lubricating the roller clutch 10, there is a possibility that the lubricating performance of this grease may be deteriorated. Also, when the frictional heat generated in the sliding contact portions becomes excessively high, the grease may be deteriorated by the heat in an early stage. The deterioration of the grease may cause a damage to the durability of the roller clutch 10 undesirably. Note that such a problem occurs in the same manner in a structure which does not comprise the pair of flange portions 27a, 27b even when the both end surfaces in the axial direction of the clutch retainer 28 are brought into sliding contact with another member which is rotated relatively to this clutch retainer 28.

The rotation transmitting device incorporating a one-way clutch therein according to the present invention has been contrived taking the circumstances as described above into consideration.

The present invention provides a rotation transmitting device comprising:
a radially inner member fixable to an end portion of a rotary shaft;
a radially outer member of cylindrical form disposed around the radially inner member to be concentric with said radially inner member;
a one-way clutch disposed between an axially central portion of an outer peripheral surface of the radially inner member and an axially central portion of an inner peripheral surface of the radially outer member for transmitting rotation between the radially outer member and the radially inner member only when the radially outer member rotates relative to said radially inner member in a predetermined direction; and
two support bearings for supporting said one-way clutch disposed between the outer peripheral surface of the radially inner member and the inner peripheral surface of the radially outer member at respective axial sides of the one-way clutch, said bearings allowing relative rotation between the radially inner member and the radially outer member and supporting a radial load applied to the radially outer member; characterized by:
   a clutch retainer, of which a portion is engaged with a clutch race member fixed relative to one of said inner and said outer peripheral surfaces of the radially outer member and the radially inner member, respectively, to resist rotation of said clutch retainer relative to said one of said inner and said outer peripheral surfaces; wherein the clutch retainer has a protruding portion which is disposed axially between a step surface of said one of said inner and said outer peripheral surfaces, or an axial end surface of a member fixed relative to said one of said inner and said outer peripheral surfaces, and an axial end surface of said clutch race member, whereby axial movement of said clutch retainer is allowed but regulated to prevent contact between said clutch retainer and a member rotating relative to the clutch retainer.

Preferably, a clutch outer race having a pair of flanges extruding inwardly in the radial direction at the both axial ends thereof is fitted and fixed inwardly of an axially central portion of the radially outer member and the axial inner surfaces of the flanges face respective axial end surfaces of the clutch retainer.

In order that the present invention may be well understood, some embodiments thereof, which are given by way of example only, will now be described with reference to the drawings, in which:
Fig. 1 is a half cross-sectional view for showing the first embodiment of the present invention;
Fig. 2 is a half cross-sectional view for illustrating the second embodiment, only with the essential portion taken out from the embodiment;
Fig. 3 is a view for illustrating the third embodiment, in the same manner as that for Fig. 2;
Fig. 4 is a half cross-sectional view for illustrating the fourth embodiment, only with the essential portion taken out from the embodiment;
Fig. 5 is a half cross-sectional view for showing the fifth embodiment of the present invention:
Fig. 6 is a cross-sectional view for showing a alternator which is conventionally known;
Fig. 7 is a half cross-sectional view for showing a conventional structure;
Fig. 8 is a partial perspective view of a clutch retainer; and
Fig. 9 is a partial lateral view for showing only a clutch inner race and a clutch retainer taken out of the structure.

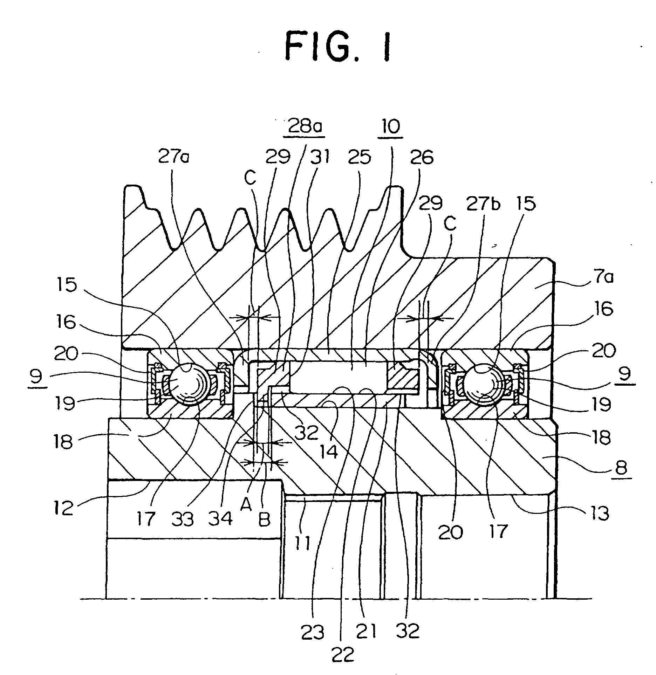

Fig. 1 shows a first embodiment of the present invention in which displacement in the axial direction of a clutch retainer 28a is restricted to prevent the contact (sliding contact) between the both end surfaces in the axial direction of the clutch retainer 28a and the inner side surfaces of a pair of flange portions 27a, 27b for constituting a clutch outer race 25. Other structures and operations are the same as those of the conventional structure shown in Figs. 7 to 9, including the arrangement that this clutch retainer 28a is formed to be rotatable together with this clutch inner race 21 due to the engagement between a plurality of convex portions 32, 32 provided on the inner peripheral surface of the clutch retainer 28a and a plurality of concave portions 23 provided on the outer peripheral surface of the clutch inner race 21. For this reason, the same reference numerals and symbols are given to the identical members to those in the conventional structure, and description of the redundant portions will be omitted or will be made briefly. In the following, the embodiments will be described centering around the important parts thereof.

A step surface 33 is formed on the outer peripheral surface of a part near an end (the portion near the left end portion in Fig. 1) of a large diameter portion 14 which is provided in a middle part in the axial direction of the sleeve 8, by protruding the outer peripheral surface of an end portion of this large diameter portion 14 outwardly in the radial direction. On the other hand, on the inner peripheral surface of an end portion (the left end portion in Fig. 1) of the clutch retainer 28a for constituting a roller clutch 10, a protruding portion 34 protruding inward in the radial direction is formed along the entire circumference thereof, or at least at one position in the circumferential direction. Then, a part on the tip end side (the inner diameter side) of this portion 34 is disposed between the step surface 33 and an axial end surface (the left end surface in Fig. 1) of the clutch inner race 21 which is fitted and fixed onto a middle part of the large diameter portion 14, whereby a displacement in the axial direction of the clutch retainer 28a is allowed but regulated so as to prevent the both end surfaces in the axial direction of this clutch retainer 28a from being brought into contact with the inner side surfaces of the paired flange portions 27a, 27b provided at the both end portions in the axial direction of the clutch outer race 25 which paired flange portions are members for rotating relatively to the clutch retainer 28a. More specifically, the dimensions of the respective members are so regulated that, when the clutch retainer 28a has a tendency to displace in the axial direction, the side surface of the portion 34 and the step surface 33 described above or one of the end surfaces of the clutch inner race 21 are brought into contact, so as to avoid the contact between the end surface in the axial direction of this clutch retainer 28a and the inner side surface of one 27a (or 27b) of the paired flange portions.

In this embodiment, in order to effect such restriction, when the thickness of the portion 34 in the axial direction is denoted by A, and the distance between the step surface 33 and the end surface of the clutch inner race 21 is by B. Accordingly, a small amount of axial movement (B-A) is allowed, which permits some error or tolerance during assembly. The distance between the both end surfaces of the clutch retainer 28a and the inner side surfaces of the flange portions 27a, 27b is C, respectively. The values for A to C are set to satisfy the relation C > B - A so that axial movement of the retainer 28a is regulated to prevent contact with flange portions 27a, 27b. For instance, when a difference B - A is 0 to 0. 5 (mm), the distance C is set to be larger than 0. 05 (mm). Note that the step surface 33 and the end surface of the clutch inner race 21 are the portions rotating together with the clutch retainer 28a. For this reason, when a side surface of the convex portion 34 and the step surface 33 or one of the end surfaces of the clutch inner race 21 are brought into contact as described above and the roller clutch 10 is overrun, the contact portions of the both surfaces do not rub each other. Moreover, if the dimensions and the positional relations of the respective parts can be strictly regulated without considering an error in assembly, the relation C > (B -A) / 2 can be attained. In this case, however, it should be arranged such that the distances C between the clutch retainer 28a and the flange portions 27a, 27b are equal to each other in a state in which the portion 34 is disposed at a neutral position in the direction of displacement.

As described above, in case of a pulley device incorporating such a one-way clutch it is possible to prevent the both end surfaces of the clutch retainer 28a from being brought into contact (sliding contact) with the inner side surfaces of the paired flange portions 27a, 27b which are rotated relatively to this clutch retainer 28a. Thus, the both end surfaces in the axial direction of this clutch retainer 28a are not abraded, or the frictional heat is not produced on the both surface portions in the axial direction of this clutch retainer 28a. As a result, it is possible to prevent the abraded powder of the clutch retainer 28a from being mixed into the grease for lubricating the roller clutch 10 or this grease from being exposed to high temperature, so as to avoid earlier deterioration of this grease.

Furthermore, in case of the present embodiment, a gap is present all the time between the inner side surface of each of the paired flange portions 27a, 27b and each of the end surfaces in the axial direction of the clutch retainer 28a. For this reason, this gap portion is used as a grease pool so that lubrication of the roller clutch 10 can be conducted sufficiently. That is, when the pulley device incorporating a one-way clutch is used, the centrifugal force works on the grease which gathers in this gap portion. Then, the grease thus receiving the centrifugal force is diffused uniformly over the inner peripheral surface of the clutch outer race 25. As a result, the grease can be fully supplied into the spaces between the rolling surfaces of a plurality of rollers 26 for constituting the roller clutch 10 and the inner peripheral surface of the clutch outer race 25, which spaces are parts requiring the grease at the time of overrun at which the driven pulley 7a and the sleeve 8 are rotated relatively to each other. For this reason, it is possible to realize a pulley device incorporating a one-way clutch which maintains the state of lubrication of the roller clutch 10 excellently over a long term and has a sufficient durability.

Though the portion 34 is disposed on one end side of the clutch retainer 28a in the foregoing embodiment, this portion 34 may be disposed on the other end side (the right end side in Fig. 1) of the clutch retainer 28a.

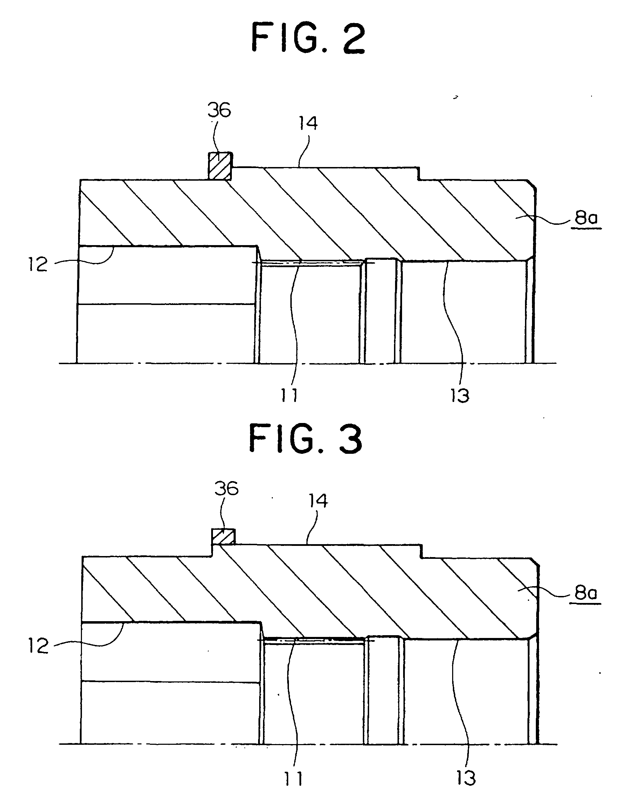

Next, Figs. 2 to 3 show second and third embodiments of the present invention. In these second and third embodiments, the step surface 33 (see Fig. 1) is not provided on the outer peripheral surface near the end (the left end in Figs. 2 and 3) of the large diameter portion 14 which constitutes the sleeve 8a, and the outer peripheral surface of this large diameter portion 14 is formed in a simple cylindrical shape along the entire length in the axial direction. Instead, an annular restricting member 36 having a rectangular cross section is interference-fitted and fixed typically onto a part which is near one end of the outer peripheral surface of the sleeve 8a and adjacent to the large diameter portion 14 (in case of the second embodiment shown in Fig. 2) or an end portion on the outer peripheral surface of this large diameter portion 14 (in case of the third embodiment shown in Fig. 3). Then, it is arranged such that the portion 34 (see Fig. 1) of the clutch retainer 28a is disposed between the axial end surface (the right end surface in Figs. 2 and 3) in the axial direction of this restricting member 36 and the axial end surface (the left end surface in Fig. 1) in the axial direction of the clutch inner race 21 (see Fig. 1) which is fitted and fixed onto the large diameter portion 14. In these second and third embodiments, the outer peripheral surface of the large diameter portion 14 can be formed in a simple cylindrical shape along the entire length in the axial direction, so that the material cost and the processing cost of the sleeve 8a can be reduced. Other arrangements and operations in the second and third embodiments are the same as those in the first embodiment described above.

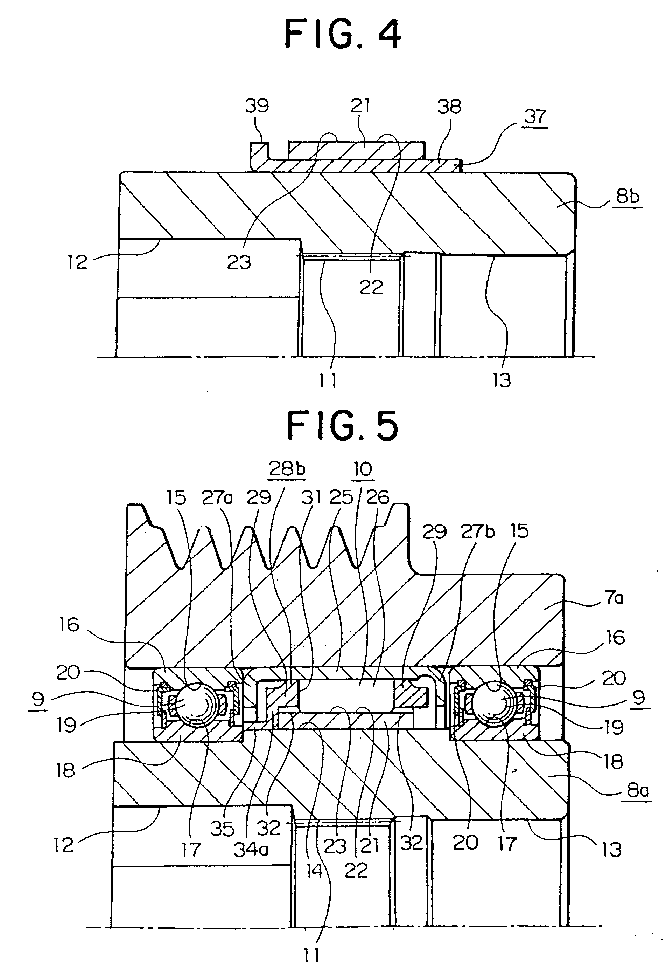

Next, Fig. 4 shows a fourth embodiment of the present invention. In the fourth embodiment, the large diameter portion 14 (see Figs. 1 to 3) is not provided on the outer peripheral surface of a sleeve 8b, and the outer peripheral surface of this sleeve 8b is formed in a simple cylindrical shape along the entire length in the axial direction. Then, a second sleeve 37 which is formed in a substantially cylindrical shape as a whole is fitted and fixed onto the outer peripheral surface of a middle part of this sleeve 8a. This second sleeve 37 comprises a cylindrical portion 38 to be interference-fitted and fixed onto the outer peripheral surface of the sleeve 8b and an outward flange portion 39 which is provided on one end portion (the left end portion in Fig. 4) of this cylindrical portion 38 in the axial direction along the entire circumference thereof. Also, the clutch inner race 21 is fitted and fixed onto the outer peripheral surface of a middle part of the cylindrical portion 38. Then, in case of the present embodiment, it is arranged such that the portion 34 (see Fig. 1) of the clutch retainer 28a is disposed between an axial end surface (the right side surface in Fig. 4) of the flange portion 39 and one end surface (the left end surface in Fig. 4) in the axial direction of the clutch inner race 21. In case of the present embodiment having such structure, since the outer peripheral surface of the sleeve 8b can be formed in a simple cylindrical shape along the entire length in the axial direction, the material cost and the processing cost of this sleeve 8b can be further reduced. Other arrangements and operations are the same as those in the first embodiment described before.

Next, Fig. 5 shows a fifth embodiment of the present invention. In case of the fifth embodiment, an eaves-shaped portion 35 which is protruding outward in the axial direction (to the left in Fig. 5) is formed at the tip end of the portion 34a which is formed in a protruding manner on one end portion (the left end portion in Fig. 5) of the clutch retainer 28b. Then, this eaves-shaped portion 35 is disposed between the inner end surface (the right axial end surface) of the inner race 18 for constituting one of the support bearings (the left one in Fig. 5) and one axial end surface (the left end surface in Fig. 5) of the clutch inner race 21 for constituting the roller clutch 10. With this arrangement, a displacement of the clutch retainer 28b in the axial direction is restricted, or regulated, so as to prevent the both end surfaces of this clutch retainer 28b in the axial direction from being brought into contact (sliding contact) with the inner side surfaces of the paired flange portions 27a, 27b. Other arrangements and operations are the same as those in the first embodiment described above, except that the form and the position of the portion 34a are changed. In otherwords, a small amount of axial movement of the protuding portion 34a is allowed but this movement is regulated to prevent contact of the clutch retainer 29 with one of the members rotating relative thereto.

Note that, a roller clutch is employed as the one-way clutch in the foregoing embodiments. However, the same effects can be obtained even when a conventional one-way clutch of another type, including a sprag clutch or a cam clutch, is used as this one-way clutch of the present invention. When a cam clutch is used, any of such peripheral surfaces as engaging with the cam becomes a cylindrical surface. Accordingly, there is a possibility that a member for constituting the cam clutch is not fitted on any of such peripheral surfaces. In such a case, another step surface is formed directly on a surface serving as this peripheral surface so as to be subjected to a restriction on the position of the clutch retainer in the axial direction. The same effect can be obtained not only when a pair of ball bearings are used as the paired support bearings, but also when a pair of rolling bearings or one ball bearing and one rolling bearing are used as these paired support bearings.

Furthermore, in the foregoing embodiments, the present invention is applied to a pulley for an alternator. However, the present invention is not limited to this. For instance, when the present invention is applied to a rotation transmitting device of a starter motor which constitutes a starting system of a car, a pinion gear which can be meshed with a ring gear formed on the outer peripheral surface of a flywheel is formed on the outer peripheral surface of the outer diameter side member in a cylindrical shape.

Since the rotation transmitting device is constituted and operated as described above, it is possible to prevent abraded powder of the clutch retainer from mixing with the grease for lubricating the one-way clutch, or to prevent deterioration of this grease in an earlier stage due to exposure of this grease to high temperature, for example. For this reason, the state of lubrication of the one-way clutch can be excellently maintained over a long term to improve the durability of the one-way clutch.

In summary of the above described embodiments, there is provided a rotation transmitting device incorporating a one-way clutch therein which comprises, an inner diameter side member fixed to an end of a rotary shaft, an outer diameter side member in a cylindrical form disposed around the inner diameter side member to be concentric with the inner diameter side member, a one-way clutch disposed between a middle part in the axial direction on the outer peripheral surface of the inner diameter side member and a middle part in the axial direction on the inner peripheral surface of the outer diameter side member for transmitting rotation between the outer diameter side member and the inner diameter side member only when the outer diameter side member has a tendency to relatively rotate in a predetermined direction with respect to the inner diameter side member, and a pair of support bearings disposed between the outer peripheral surface of the inner diameter side member and the inner peripheral surface of the outer diameter side member at a position to pinch this one-way clutch from the both sides thereof in the axial direction for allowing a relative rotation between the inner diameter side member and the outer diameter side member while supporting a radial load applied on this outer diameter side member.

Specifically, in the rotation transmitting device incorporating a one-way clutch therein, a clutch retainer for constituting the one-way clutch is arranged, based on that a part of the peripheral surface of this clutch retainer is brought into engagement directly or through another member with either one of the inner peripheral surface of the outer diameter side member and the outer peripheral surface of the inner diameter side member, to be rotated together with a member disposed on the one peripheral surface. In addition, a portion formed in a protruding manner toward the above one peripheral surface at an end portion in the axial direction of the clutch retainer is disposed between a step surface formed on the above one peripheral surface or an end surface in the axial direction of a member fitted and fixed on this one peripheral surface and another step surface formed on the one peripheral surface or an end surface in the axial direction of the other member fitted and fixed to. this one peripheral surface so as to regulate a displacement of the clutch retainer in the axial direction, thereby preventing the both end surfaces of this clutch retainer in the axial direction from contacting with a member which is rotated relatively to this clutch retainer.

Furthermore, in the rotation transmitting device of the embodiments, a clutch outer race having a pair of flanges extending inward in the radial direction at the both ends in the axial direction thereof may be fitted and fixed into a middle part of the outer diameter side member in the axial direction with one of the peripheral surfaces serving as the outer peripheral surface of the inner diameter side member, and the inner side surfaces of the flanges which are opposite to each other may be approximated to face the both end surfaces in the axial direction of the clutch retainer.

As described above, in case of the rotation transmitting device according to the embodiments, it is possible to prevent the both end surfaces in the axial direction of the clutch retainer from being brought into contact (sliding contact) with a member which relatively rotates with respect to this clutch retainer. More specifically, when the clutch retainer has a tendency to displace in the axial direction, prior to the contact of the end surfaces in the axial direction of this cutch retainer with the portion rotating relatively to the clutch retainer, the portion provided on an end portion in the axial direction of this clutch retainer is brought into contact with the step surface formed on the above one peripheral surface or an end surface in the axial direction of the member which is fitted and fixed on this one peripheral surface. Since the step surface and the end surface are portions rotating with the clutch retainer, the step surface and the end surface do not rub the contact portion of the portion when the one-way clutch overruns. Thus, in case of the rotation transmitting device incorporating a one-way clutch therein, there is no possibility of abrasion of the both end surfaces in the axial direction of the clutch retainer or generation of frictional heat on the both end surfaces in the axial direction of the clutch retainer. For this reason, the abraded powder of the clutch retainer is not mixed into the grease for lubricating the one-way clutch, or this grease is not deteriorated by the heat. Consequently, it is possible to realize a rotation transmitting device incorporating a one-way clutch therein which maintains the state of lubrication of the one-way clutch over a long term satisfactorily and has a sufficient durability.

Furthermore, the structure may be arranged such that a gap is present all the time between the inner side surfaces of the paired round wheel portions formed at the both end portions in the axial direction of the clutch outer race and the both end surfaces in the axial direction of the clutch retainer. For this reason, this gap portion may be used as a grease pool, so as to conduct lubrication of the one-way clutch satisfactorily. More specifically, when the rotation transmitting device incorporating a one-way clutch therein is used, the centrifugal force acts upon the grease which is thick on the gap portion. Then, the grease thus receiving the centrifugal force is diffused uniformly on the inner peripheral surface of the clutch outer race. As a result, it is possible to sufficiently supply the grease into a gap portion between the surfaces of a plurality, of locking members for constituting the one-way clutch and the inner peripheral surface of the clutch outer race. For this reason, the state of lubrication of the one-way clutch can be satisfactorily maintained for a long term so as to realize a rotation transmitting device incorporating a one-way clutch therein which has a sufficient durability.

## Claims

1. A rotation transmitting device comprising:
a radially inner member (8) fixable to an end portion of a rotary shaft;
a radially outer member (7a) of cylindrical form disposed around the radially inner member to be concentric with said radially inner member;
a one-way clutch (10) disposed between an axially central portion of an outer peripheral surface of the radially inner member and an axially central portion of an inner peripheral surface of the radially outer member for transmitting rotation between the radially outer member and the radially inner member only when the radially outer member rotates relative to said radially inner member in a predetermined direction; and
two support bearings (9, 9) for supporting said one-way clutch disposed between the outer peripheral surface of the radially inner member and the inner peripheral surface of the radially outer member at respective axial sides of the one-way clutch, said bearings allowing relative rotation between the radially inner member and the radially outer member and supporting a radial load applied to the radially outer member; **characterized by**:
a clutch retainer (28a), of which a portion (32) is engaged with a clutch race member (21) fixed relative to one of said inner and said outer peripheral surfaces of the radially outer member and the radially inner member, respectively, to resist rotation of said clutch retainer relative to said one of said inner and said outer peripheral surfaces; wherein the clutch retainer has a protruding portion (34; 34a, 35) which is disposed axially between a step surface (33) of said one of said inner and said outer peripheral surfaces, or an axial end surface of a member (36; 39; 18) fixed relative to said one of said inner and said outer peripheral surfaces, and an axial end surface of said clutch race member (21), whereby axial movement of said clutch retainer is allowed but regulated to prevent contact between said clutch retainer and a member (7a; 16; 25) rotating relative to the clutch retainer.

2. A rotation transmitting device as claimed in claim 1, wherein a clutch outer race (25) having a pair of flanges extruding inwardly in the radial direction at the both axial ends thereof is fitted and fixed inwardly of an axially central portion of the radially outer member (7a) and the axial inner surfaces of the flanges face respective axial end surfaces of the clutch retainer.

## Patentansprüche

1. Drehübertragungsvorrichtung, welche aufweist:
ein radial inneres Teil (8), das an einem Endbereich einer Drehwelle befestigbar ist;
ein radial äußeres Teil (7a) mit zylindrischer Form, das um das radial innere Teil herum angeordnet ist, um konzentrisch mit dem radial inneren Teil zu sein;
eine Einwegkupplung (10), die zwischen einem axial mittleren Bereich einer äußeren peripheren Oberfläche des radial inneren Teils und einem axial mittleren Bereich einer inneren peripheren Oberfläche des radial äußeren Teils angeordnet ist für die Drehübertragung zwischen dem radial äußeren Teil und dem radial inneren Teil nur dann, wenn das radial äußere Teil sich relativ zu dem radial inneren Teil in einer vorbestimmten Richtung dreht; und
zwei Stützlager (9, 9) zum Stützen der Einwegkupplung, die sich zwischen der äußeren peripheren Oberfläche des radial inneren Teils und der inneren peripheren Oberfläche des radial äußeren Teils an den jeweiligen axialen Seiten der Einwegkupplung befinden, welche Lager eine relative Drehung zwischen dem radial inneren Teil und dem radial äußeren Teil ermöglichen und eine radiale Last, die auf das radial äußere Teil ausgeübt wird, stützen; **gekennzeichnet durch**:
ein Kupplungsrückhalteglied (28a), von dem ein Bereich (32) mit einem Kupplungsdurchdrehglied (21) in Eingriff ist, das relativ zu einer von der inneren und der äußeren peripheren Oberfläche des radial äußeren Teils bzw. radial inneren Teils befestigt ist, um einer Drehung des Kupplungsrückhalteglieds relativ zu der einen von der inneren und der äußeren peripheren Oberfläche zu widerstehen;
worin das Kupplungsrückhalteglied einen vorstehenden Bereich (34; 34a, 35) hat, der axial zwischen einer Oberflächenstufe (33) der einen von der inneren und der äußeren peripheren Oberfläche oder einer axialen Endfläche eines Glieds (36; 39; 18), das relativ zu der einen der inneren und der äußeren peripheren Oberfläche befestigt ist, und einer axialen Endfläche des Kupplungsdurchdrehglieds (21) angeordnet ist, wo**durch** eine axiale Bewegung des Kupplungsrückhalteglieds ermöglicht wird, aber reguliert ist, um einen Kontakt zwischen dem Kupplungsrückhalteglied und einem Glied (7a; 16; 25), das sich relativ zu dem Kupplungsrückhalteglied dreht, zu verhindern.

2. Drehübertragungsvorrichtung nach Anspruch 1, bei der ein äußeres Kupplungsdurchdrehglied (25) mit einem Paar von sich in radialer Richtung an den beiden axialen Enden hiervon nach innen erstreckenden Flanschen innerhalb eines axial mittleren Bereichs des radial äußeren Teils (7a) eingepasst und befestigt ist und die axial inneren Oberflächen der Flansche den jeweiligen axialen Endflächen des Kupplungsrückhalteglieds zugewandt sind.

## Revendications

1. Dispositif de transmission de rotation comprenant :
un élément interne radialement (8) pouvant être fixé sur une partie d'extrémité d'un arbre rotatif;
un élément interne radialement (7a) de forme cylindrique disposé autour de l'élément interne radialement pour être concentrique avec ledit élément interne radialement ;
un embrayage unidirectionnel (10) disposé entre une partie centrale axialement d'une surface périphérique externe de l'élément interne radialement et une partie centrale axialement d'une surface périphérique interne de l'élément externe radialement afin de transmettre la rotation entre l'élément externe radialement et l'élément interne radialement uniquement lorsque l'élément externe radialement tourne par rapport au dit élément interne radialement, dans une direction prédéterminée ; et
deux paliers supports (9, 9) pour supporter ledit embrayage unidirectionnel disposé entre la surface périphérique externe de l'élément interne radialement et la surface périphérique interne de l'élément externe radialement sur des côtés axiaux respectifs de l'embrayage unidirectionnel, lesdits paliers permettant une rotation relative entre l'élément interne radialement et l'élément externe radialement et supportant une charge radiale appliquée à l'élément externe radialement ; **caractérisé par** :
une bague d'embrayage (28a), dont une partie (32) est en prise sur un élément de bague de roulement d'embrayage (21) fixé par rapport à l'une desdites surfaces périphériques interne et externe de l'élément externe radialement et de l'élément interne radialement, respectivement, afin de résister à la rotation de ladite bague d'embrayage, par rapport à ladite une desdites surfaces périphériques interne et externe ; dans lequel ladite bague d'embrayage possède une partie faisant saillie (34 ; 34a, 35) qui est disposée axialement entre une surface à épaulement (33) de ladite une desdites surfaces périphériques interne et externe, ou une surface d'extrémité axiale d'un élément (36 ; 39 ; 18) fixé par rapport à ladite une desdites surfaces périphériques interne et externe, et une surface d'extrémité axiale dudit élément de bague de roulement d'embrayage (21), grâce à quoi le mouvement axial de ladite bague d'embrayage est autorisé mais régulé pour empêcher un contact entre ladite bague d'embrayage et un élément (7a ; 16 ; 25) tournant par rapport à la bague d'embrayage.

2. Dispositif de transmission de rotation tel que revendiqué dans la revendication 1, dans lequel un chemin de roulement externe d'embrayage (25) possédant une paire de brides qui font saillie vers l'intérieur dans la direction radiale, aux deux extrémités axiales de celles-ci, est ajustée et fixée, vers l'intérieur, d'une partie centrale axialement de l'élément externe radialement (7a) et les surfaces internes axiales des brides font respectivement face aux surfaces d'extrémité axiale respective de la bague d'embrayage.
